# EUROPEAN PATENT SPECIFICATION

(11) **EP 2 360 361 B1**
(45) Date of publication and mention of the grant of the patent: **30.11.2016**
(21) Application number: 09829052.1
(22) Date of filing: 24.11.2009
(51) Int. Cl.: F01N 3/24, B01D 53/94, B01J 23/63, F01N 3/10, F01N 3/28, F02D 41/04

(54) **EXHAUST PURIFICATION APPARATUS FOR INTERNAL COMBUSTION ENGINE**
ABGASREINIGUNGSVORRICHTUNG FÜR EINEN VERBRENNUNGSMOTOR
APPAREIL DE PURIFICATION DE GAZ D'ECHAPPEMENT POUR MOTEUR A COMBUSTION INTERNE

(30) Priority: 26.11.2008 JP 2008301509
(43) Date of publication of application: 24.08.2011
(73) Proprietor: Honda Motor Co., Ltd., Minato-ku Tokyo 107-8556 (JP)
(72) Inventor: NISHI, Tomohiro, Wako-shi Saitama 351-0193 (JP); KUROKI, Kei, Wako-shi Saitama 351-0193 (JP)
(74) Representative: Weickmann & Weickmann PartmbB
(86) International application number: PCT/JP2009/069762
(87) International publication number: WO 2010/061804

(56) References cited:
- WO-A2-2008/024708
- JP-A- 10 159 545
- JP-A- 2002 273 232
- JP-A- 2007 090 254
- JP-A- 2007 111 650
- JP-T- 2005 505 403

## Description

### TECHNICAL FIELD

The present invention relates to an exhaust purification apparatus for an internal combustion engine. In particular, it relates to an apparatus provided with a catalytic converter that purifies exhaust flowing in an exhaust passage.

### BACKGROUND ART

Conventionally, a catalytic converter has been provided in the exhaust system of an internal combustion engine to purify the exhaust. This catalytic converter is configured by loading a three-way catalyst with a noble metal such as platinum, palladium and rhodium as the active species onto a carrier. The three-way catalyst purifies exhaust by causing the three species of carbon monoxide (hereinafter referred to as "CO"), non-methane organic gas (hereinafter referred to as "NMOG") and nitrogen oxides (hereinafter referred to as "NOx") to change into harmless components.

Incidentally, in recent years, an exhaust purification apparatus in which the catalytic converter is configured into two stages has been proposed in order to improve the exhaust purification performance (refer to JP 2007-111650 A). With this exhaust purification apparatus, the catalytic converter is configured into two stages, with the amount of ceria contained in the catalytic converter that is on the upstream side larger than that in the catalytic converter on the
downstream side. It is thereby possible to suppress the formation of hydrogen sulfide, which is a cause of a foul odor.

WO 2008/024708 A2 discloses an exhaust gas treatment device in which an upstream catalyst and a downstream catalyst are established as a single body in which the second layer is identically present both in the upstream catalyst portion and downstream catalyst portion so that the second layer has an identical structure both in the upstream catalyst portion and the downstream catalyst portion, wherein both layers either contain only rhodium or rhodium in combination with platinum.

An exhaust purification apparatus for an international combustion engine according to the preamble of claim 1 is known from JP 2007-111650 A.

### DISCLOSURE OF THE INVENTION

### Problems to be Solved by the Invention

Incidentally, there is a characteristic of exhaust being effectively purified in a three-way catalyst when causing combustion within a width of air-fuel ratios around the theoretical air fuel ratio called a window. However, in practice, the air-fuel ratio deviates from the window depending on the operating conditions of the automobile, and the purification performance may decline greatly.

Therefore, a technique to prevent a decline in the purification performance by the three-way catalyst has been proposed in which the width of the window is widened by greatly adding an oxygen storage capacity component such as ceria and increasing the amount of catalytic noble metal. However, the catalytic noble metals such as platinum, palladium and rhodium used catalytic converters are extremely high priced; therefore, it is preferable for the amounts thereof used to be decreased as much as possible in order to reduce the cost.

The present invention has been made taking the aforementioned problems into account, and has an object of providing an exhaust purification apparatus for an internal combustion engine that can reduce the amount of catalytic noble metal used in the catalytic converter, without decreasing the purification performance.

### Means for Solving the Problems

This object is achieved by an exhaust purification apparatus according to claim 1. The exhaust purification apparatus (2), includes a catalytic converter (3) that is provided to an exhaust passage of the internal combustion engine and purifies exhaust flowing through the exhaust passage, the catalytic converter containing a component having oxygen storage capacity in addition to a catalytic noble metal having NOx purification capacity, and including an upstream catalytic converter (31) and a downstream catalytic converter (32) provided on a more downstream side than the upstream catalytic converter. The upstream catalytic converter contains more of the component having oxygen storage capacity than the downstream catalytic converter, and the downstream catalytic converter contains more of the catalytic noble metal having NOx purification capacity than the upstream catalytic converter. The exhaust purification apparatus further includes: an upstream exhaust sensor (61) that outputs a signal (KACT) according to a component of the exhaust flowing into the upstream catalytic converter; a downstream exhaust sensor (62) that outputs a signal (VO2) according to a component of the exhaust flowing into the downstream catalytic converter; and an air-fuel ratio
control means (5, 51, 52) for controlling an air-fuel ratio of the internal combustion engine based on the signals output from the upstream exhaust sensor and the downstream exhaust sensor, so that an air-fuel ratio of exhaust flowing into the downstream catalytic converter matches a target value set in the vicinity of a theoretical air fuel ratio.

According to the present invention, the catalytic converter that purifies exhaust was configured in the two stages of the upstream catalytic converter and the downstream catalytic converter, and further, the content of the component having oxygen storage capacity in the upstream catalytic converter was greater than the content of the component having oxygen storage capacity in the downstream catalytic converter. In this way, even in a case of the air-fuel ratio of the exhaust flowing into the upstream catalytic converter being unstable, the air-fuel ratio of exhaust on a downstream side thereof, i.e. exhaust flowing into the downstream catalytic converter, can be stabilized. Furthermore, in addition to this, the heat capacity of the downstream catalytic converter is small, and thus the heat-up performance of the downstream catalytic converter can be improved.

In addition, according to the present invention, the upstream exhaust sensor and the downstream exhaust sensor are provided, and thus the air-fuel ratio of the internal combustion engine is controlled so that the air-fuel ratio of the exhaust flowing into the downstream catalytic converter matches the target value set in the vicinity of the theoretical air fuel ratio, based on the signals output from these sensors. The air-fuel ratio of the exhaust flowing into the downstream catalytic converter can thereby be further stabilized in the vicinity of the theoretical air fuel ratio.

According to the present invention, since the air-fuel ratio of the exhaust flowing into the downstream catalytic converter can be stabilized in the vicinity of the theoretical air fuel ratio in the above way, it is possible to efficiently purify exhaust by the downstream catalytic converter in particular. Specifically, the purification performance of exhaust can be maintained without adding excess catalytic noble metal from the perspective of the upstream catalytic converter and downstream catalytic converter overall. In other words, compared to the aforementioned conventional exhaust purification apparatus, the amount of catalytic noble metal used can be reduced,without decreasing the exhaust purification performance.

In addition, according to the present invention, the content of catalytic noble metal having NOx purification capacity in the downstream catalytic converter was greater than the content in the upstream catalytic converter. As described above, the air-fuel ratio of the exhaust flowing into the downstream catalytic converter can be stabilized to the vicinity of the theoretical air fuel ratio in the present invention. Therefore, catalytic noble metal can be efficiently used as a whole by making the content of catalytic noble metal in the downstream catalytic converter, for which the air-fuel ratio has been stabilized, to be large. Consequently, the amount of catalytic noble metal used can be further reduced. In addition, since the upstream catalytic converter is closer to the internal combustion engine than the downstream catalytic converter, the influence from heat degradation thereon is great. Therefore, the influence from heat degradation on the catalytic noble metal as a whole can be reduced by making the content of catalytic noble metal in the upstream catalytic converter less than the downstream catalytic converter. Consequently, the purification performance by the catalytic converter can be maintained longer.

According to the present invention, the catalytic noble metal having NOx purification capacity includes at least one selected from the group consisting of rhodium, palladium and platinum.

According to the present invention, at least one selected from the group consisting of rhodium, palladium and platinum is used as the catalytic noble metal. The NOx purification performance by the catalytic converter can thereby be ensured.

In this case, it is preferable for the component having oxygen storage capacity to include at least one selected from the group consisting of cerium and zirconium.

According to the present invention, at least one selected from the group consisting of cerium and zirconium is used as the component having oxygen storage capacity. The oxygen storage capacity by the catalytic converter unit can thereby
be ensured.

According to the present invention, the upstream catalytic converter includes a carrier (311) and a catalyst layer (31 L) of three layers loaded to be stratified on the carrier, and the catalyst layer of three layers of the upstream catalytic converter to be configured to include a first layer (312) containing palladium, a second layer (313) containing rhodium, and a third layer (314) containing palladium, in this order from a carrier side to a surface side.

According to the present invention, the catalyst layers of the upstream catalytic converter are configured by three layers, with palladium being contained in the first layer, rhodium being contained in the second layer, and palladium being contained in the third layer in order from the carrier side to the surface side. Incidentally, among the catalytic noble metals having NOx purification capacity, rhodium is particularly high price and the purification performance is high. As a result, for the rhodium, it is necessary to avoid poisoning by phosphorus and sulfur as much as possible, while reducing the amount used thereof as much as possible. In the present invention, poisoning of the rhodium by phosphorus and sulfur can be suppressed by providing rhodium to a second layer that is not the surface most side. Therefore, the NOx purification performance of the catalytic converter overall can be stabilized.

According to the present invention, the downstream catalytic converter includes a carrier (321) and a catalyst
layer (32L) of two layers loaded to be stratified on the carrier, and the catalyst layer of two layers of the downstream catalytic converter to be configured to include a first layer (322) containing palladium and a second layer (323) containing rhodium, in this order from a carrier side to a surface side.

According to the present invention, the catalytic layers of the downstream catalytic converter are configured by two layers, with palladium being contained in the first layer and rhodium being contained in the second layer, in order from the carrier side to the surface side. The heat capacity can be reduced relative to the upstream catalytic converter by configuring the catalyst layers as two layers in this way. The downstream catalytic converter can thereby be quickly heated up and activated. In addition, NOx can be efficiently purified by providing rhodium for which the purification performance is particularly high to the second layer, which becomes the surface most side.

Incidentally, the influence of poisoning of rhodium by phosphorus and sulfur is a concern due to providing rhodium to the second layer, which becomes the surface most side. However, since the exhaust having passed through the upstream catalytic converter flows into the downstream catalytic converter, the influence of poisoning by phosphorus and sulfur is small compared to the upstream catalytic converter. Therefore, exhaust can be efficiently purified over an extended time period.

In this case, it is preferable that rhodium is not contained in the layer (314) on a surface most side among the plurality of catalyst layers of the upstream catalytic converter.

According to the present invention, the upstream catalytic converter is configured by the carrier and the plurality of catalyst layers loaded on this carrier, with rhodium not being contained in the layer on the surface most side. Poisoning of the rhodium, which is particularly high price and has high purification performance as a catalytic noble metal, by phosphorus and sulfur can thereby be suppressed.

In addition, according to the present invention, the downstream catalytic converter is configured by the carrier and the plurality of catalyst layers loaded on this carrier, with rhodium being contained in the layer on the surface most side. Exhaust can thereby be efficiently purified by the rhodium having high purification performance. Herein, although the influence of poisoning of the rhodium by phosphorus and sulfur is a concern due to providing rhodium at the surface most side, since exhaust that has passed through the upstream catalytic converter flows into the downstream catalytic
converter, the influence of poisoning by phosphorus and sulfur is small compared to the upstream catalytic converter. Therefore, exhaust can be efficiently purified over an extended time period.

In this case, it is preferable for the upstream catalytic converter and the downstream catalytic converter to both be provided immediately after the internal combustion engine.

According to the present invention, by providing the upstream catalytic converter and the downstream catalytic converter immediately after the internal combustion engine, the downstream catalytic converter, which is a lower stage that does not heat up easily, can be quickly heated up. A decline in the purification performance during low temperatures such as immediately after startup of the automobile can thereby be prevented.

### BRIEF DESCRIPTION OF THE DRAWINGS

FIG. 1 is a schematic diagram showing a configuration of an engine and an exhaust purification apparatus thereof according to an embodiment of the present invention;
FIG. 2 is a side view showing a configuration of a catalytic converter unit according to the embodiment;
FIG. 3 is a cross-sectional view showing a configuration of an upstream catalytic converter according to the embodiment;
FIG. 4 is a cross-sectional view showing a configuration of a downstream catalytic converter according to the embodiment;
FIG. 5 is an illustration schematically showing a reaction associated with the purification of exhaust according to the embodiment;
FIG. 6 is an illustration schematically showing a reaction associated with the purification of exhaust according to the embodiment;
FIG. 7 is a graph showing the fluctuation in the temperature of the upstream catalytic converter according to the embodiment;
FIG. 8 is a graph showing the fluctuation in the temperature of the downstream catalytic converter according to the embodiment;
FIG. 9 is a graph showing the emitted amount of NOx per unit time;
FIG. 10 is a graph showing the temperature dependence of the NMOG purification rate of each catalytic noble metal;
FIG. 11 is a graph showing the temperature dependence of the NOx purification rate of each catalytic noble metal; and
FIG. 12 is a graph showing the air-fuel ratio dependence of the NOx purification performance of rhodium.

### EXPLANATION OF REFERENCE NUMERALS

1 Engine (internal combustion engine)
2 Exhaust purification apparatus
3 Catalytic converter unit (catalytic converter)
31 Upstream catalytic converter
311 Carrier
31L Catalyst layer
312 First layer
313 Second layer
314 Third layer
32 Downstream catalytic converter
321 Carrier
32L Catalyst layer
322 First layer
323 Second layer
5 Electronic control unit (air-fuel ratio control means)
51 Target air-fuel ratio calculating unit (air-fuel ratio control means)
52 Fuel injection amount calculating unit (air-fuel ratio control means)
61 LAF sensor (upstream exhaust sensor)
62 oxygen concentration sensor (downstream exhaust sensor)

### PREFERRED MODE FOR CARRYING OUT THE INVENTION

An embodiment of the present invention will be explained hereinafter while referring to the drawings.

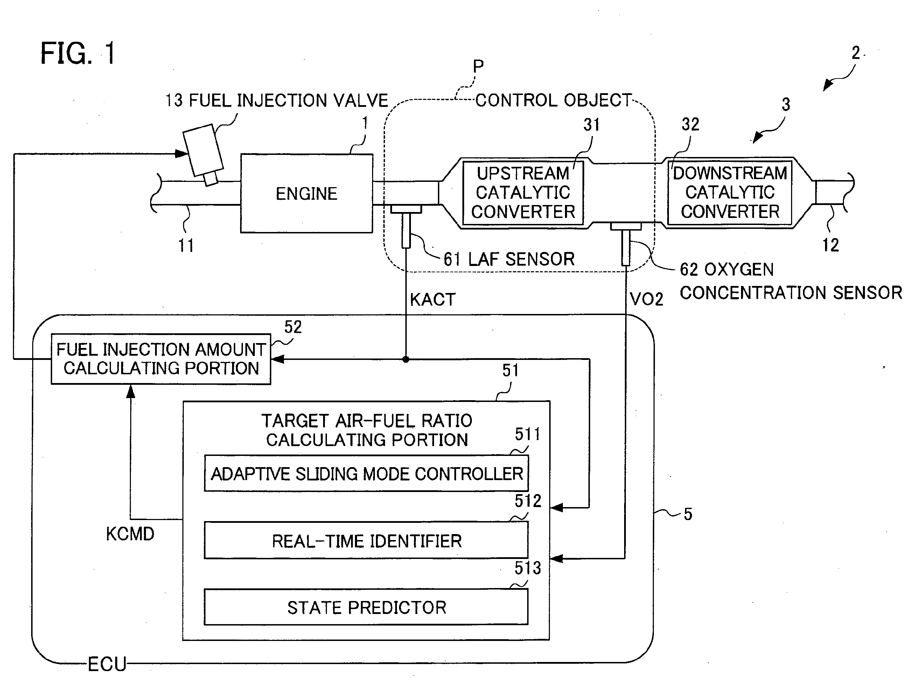

FIG. 1 is a schematic diagram showing a configuration of an internal combustion engine 1 (hereinafter simply referred to as "engine") and an exhaust purification apparatus 2 thereof according to the present embodiment.

The engine 1 includes a plurality of cylinders that are not illustrated, and intake plumbing 11 and exhaust plumbing 12 that are in communication with these cylinders. A throttle valve that is not illustrated, fuel injection valves 13, and intakes valves are provided in the intake plumbing 11.

The fuel injection valve 13 is provided to every cylinder between the throttle valve and the intake valve of each cylinder. The fuel injection valves 13 are connected to a fuel pump that is not illustrated, as well as being electrically connected to an electronic control unit (hereinafter referred to as "ECU") 5, and the opening times of these fuel injection valves 13 are controlled by the ECU 5.

The exhaust purification apparatus 2 is configured to include a catalytic converter unit 3 provided in the exhaust plumbing 12 immediately after the engine 1, and the ECU 5 that controls the fuel injection valves 13.

The catalytic converter unit 3 is configured to include a catalytic converter of the two stages of an upstream catalytic converter 31, and a downstream catalytic converter 32 provided more on a downstream side than this upstream catalytic converter 31. This upstream catalytic converter 31 and downstream catalytic converter 32 each are configured by loading a three-way catalyst, which oxidizes NMOG and CO and reduces NOx, on a honeycomb structure, and purify the exhaust discharged from the engine 1.

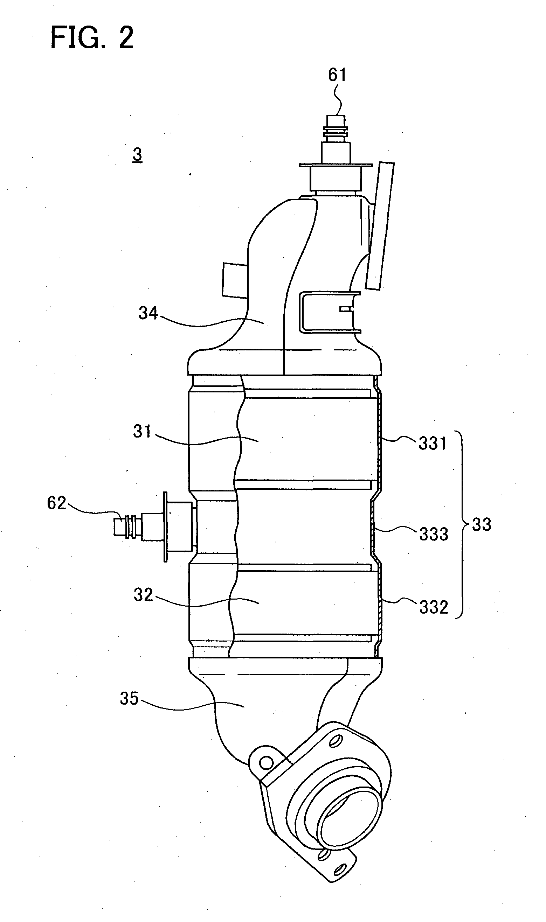

FIG. 2 is a side view showing the configuration of the catalytic converter unit 3.

The catalytic converter unit 3 is configured to include the upstream catalytic converter 31 and the downstream catalytic converter 32, a casing that houses these catalytic converters 31 and 32, and an upstream-side collector 34 and downstream-side collector 35 respectively provided on an upstream side and downstream side of this casing. It should be noted that FIG. 2 shows a view in which a portion of the casing 33 is cut-away.

The casing 33 is a substantially cylindrical shape, and includes a first housing chamber 331 that houses the upstream catalytic converter 31 of substantially columnar shape, and a second housing chamber 332 that houses the downstream catalytic converter 32 of substantially columnar shape. In addition, a reduced-diameter portion 333 that is more reduced in diameter than the inside diameter of these housing chambers 331 and 332 is formed between the first housing chamber 331 and the second housing chamber 332.

An end of the upstream-side collector 34 on the downstream side is connected to the casing 33, and an end on the upstream side is connected to each cylinder of the engine via an exhaust manifold provided with runners.

An end of the downstream-side collector 35 on the upstream side is connected to the casing 33, and an end on the downstream side is connected to the exhaust plumbing extending below the floor of the automobile.

The exhaust flows as described below in the catalytic converter unit 3 configured in the above way.

The exhaust discharged from each cylinder of the engine is merged via the exhaust manifold and rectified by the upstream-side collector 34, and is then introduced into the casing 33. The exhaust introduced into the casing 33 is purified by the upstream catalytic converter 31 inside of the first housing chamber 331, then passes through the reduced-diameter portion 333, is purified by the downstream catalytic converter 32 inside of the second housing chamber 332, and is discharged from the casing 33. The exhaust discharged from the casing 33 passes through the downstream-side collector 35, and is then discharged to outside the automobile through the exhaust plumbing.

Herein in particular, the catalytic converter unit 3 is provided immediately after the engine 1 as described above. In other words, the catalytic converter unit 3 is not provided under the floor of the automobile. Therefore, the upstream catalytic converter 31 and the downstream catalytic converter 32 are both provided immediately after the engine, and thus exhaust of relatively high temperature is supplied thereto. By configuring in the above way, the catalytic converter unit 3 becomes a part of the exhaust passage of the engine 1 to purify the exhaust flowing through this exhaust passage.

In addition, an LAF sensor 61 and an oxygen concentration sensor 62 are provided to the catalytic converter unit 3. The LAF sensor 61 is fixed to the upstream-side collector 34 such that the detection portion thereof is positioned inside of the upstream-side collector 34. The oxygen concentration sensor 62 is fixed to the casing 33 such that the detection portion thereof is positioned inside of the reduced-diameter portion 333. It should be noted that the operation of these sensors 61 and 62 will be explained in detail later.

Next, specific configurations of the upstream catalytic converter 31 and the downstream catalytic converter 32 will be explained in detail.

The three-way catalysts loaded to these catalytic converters 31 and 32 contain an OSC material having oxygen storage capacity, in addition to a catalytic noble metal having NOx purification capacity. More specifically, it is preferable to contain at least one selected from the group consisting of rhodium, palladium and platinum as the catalytic noble metal having NOx purification capacity. Among these catalytic noble metals, the NOx purification performance of rhodium is particularly high. In addition, more specifically, it is preferable to contain at least one selected from the group consisting of cerium and zirconium as the OSC material having oxygen storage capacity.

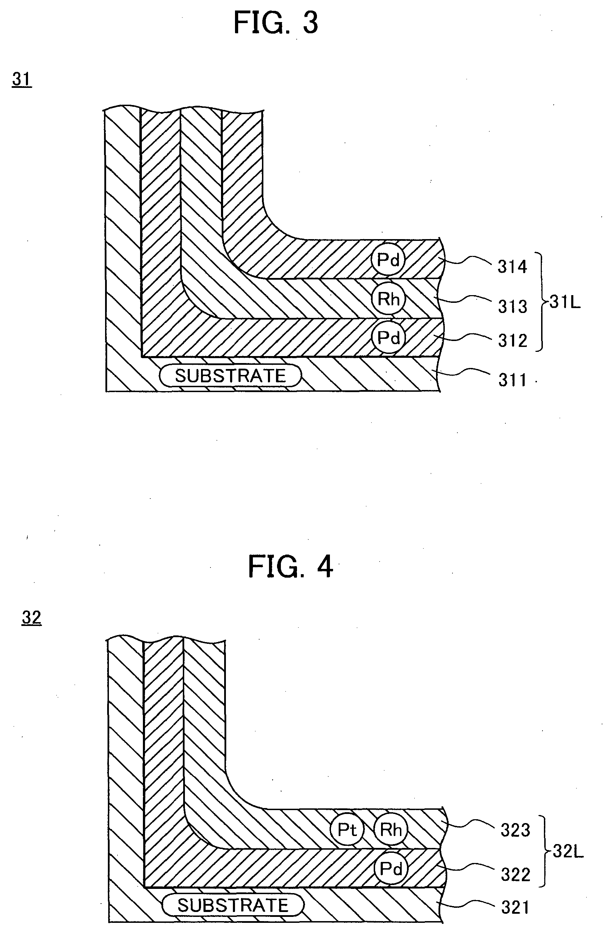

FIG. 3 is a cross-sectional view showing the configuration of the upstream catalytic converter 31.

The upstream catalytic converter 31 includes a carrier 311 of honeycomb structure, and a three-layer catalyst layer 31L loaded on this carrier 311. This three-layer catalyst layer 31L is configured to include a first layer 312, a second layer 313, and a third layer 314 in this order from the carrier 311 side to the surface side.

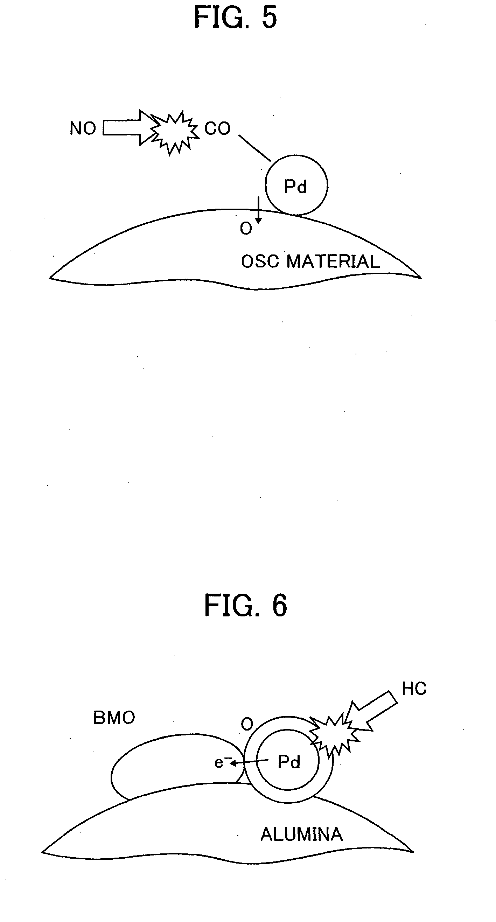

The first layer 312 contains palladium (Pd) as the catalytic noble metal having NOx purification capacity, and mainly reduces NOx by action of this palladium. When this process progresses, oxidation of the palladium progresses and the NOx reduction capacity will decline before long; therefore, the palladium is preferably loaded on a support made from an OSC material. The oxygen is thereby stored in the OSC material and oxidation of the palladium is suppressed; therefore, the amount of palladium used can be reduced while maintaining the NOx reduction capacity (refer to FIG. 5).

The second layer 313 contains rhodium (Rh) as a catalytic noble metal having NOx purification capacity, and mainly purifies NMOG and NOx by action of this rhodium. When this process progresses, there is a tendency for the oxidation of rhodium to progress and form a solid solution (embed) in a support such as of alumina, and the purification performance for NMOG and NOx to decline. Therefore, it is preferable for the rhodium to be supported on an irreducible metal oxide coated on the support. The oxidation of rhodium and the formation of a solid solution in the support are thereby suppressed; therefore, the amount of rhodium required to be used can be reduced while maintaining the purification performance for NMOG and NOx. Although the irreducible metal oxide is not particularly limited, it is preferable to be an oxide of at least one metal selected from the group consisting of barium, calcium, magnesium and strontium. In addition, similarly to the first layer 312, it is preferable for rhodium to be loaded on a support made from an OSC material in the second layer 313.

The third layer 314 contains palladium (Pd) as a catalytic noble metal having NOx purification capacity, and mainly oxidizes NMOG by action of this palladium. In addition, it is preferable for rhodium, which has a particularly high NOx purification performance, to not be contained in the third layer 314, which is at the most surface side of the upstream catalytic converter 31. Herein, it is preferable for the third layer 314 to further contain a base metal oxide (BMO). Since the base metal oxide thereby adjoins the palladium, oxidation of palladium (PdO conversion) is promoted, and the purification performance for NMOG and CO can be further improved (refer to FIG. 6). Similarly to the other layers, it is preferable for palladium to be loaded on a well-known support such as of alumina for the third layer 314 as well. Although not particularly limited, oxides such as of barium, calcium, magnesium and strontium can be exemplified as the base metal oxide.

FIG. 4 is a cross-sectional view showing the configuration of the downstream catalytic converter 32.

The downstream catalytic converter 32 includes a carrier 321 of honeycomb structure and a two-layer catalyst layer 32L loaded on this carrier 321. This two-layer catalyst layer 32L is configured to include a first layer 322 and a second layer 323 in this order from the carrier 321 to the surface side.

The first layer 322 contains palladium (Pd) as a noble metal catalyst having NOx purification capacity, and mainly reduces NOx by action of this palladium. In general, the compatibility of palladium with platinum and rhodium is poor, and there is a tendency to alloy with these, causing the catalyst performance to decline; however, in the present embodiment, since the first layer 322 and the second layer 323 are divided to be separate, a decline in the catalyst performance can be suppressed. In addition, if the palladium is exposed to high temperature gas, there is a tendency to cover the catalyst surfaces by granulating, causing the performance to decline; however, in the present embodiment, since direct impinging of high temperature gas is avoided by coating with the second layer 323, a decline in purification performance can be suppressed.

Moreover, if oxidation of palladium is progressing by the process of NOx reduction in the first layer 322, the NOx reduction capacity will decline before long; therefore, it is preferable for the palladium to be loaded on a support made from an OSC material. The oxidation of palladium is thereby suppressed by the oxygen being stored in the OSC material; therefore, the amount of palladium used can be reduced while maintaining the NOx reduction capacity.

The second layer 323 contains rhodium as a noble metal catalyst having NOx purification capacity, and mainly purifies NMOG and NOx by action of this rhodium. Since the second layer 323 further contains platinum in the present embodiment, oxidation of NOx can be further improved by the steam reforming (SR) reaction being promoted. It should be noted that, generally, if platinum is exposed to a high temperature gas, although there is a tendency for other catalyst surfaces to be covered by granulation, causing the performance to decline, in the present embodiment, since gas lowered in temperature to some extent by passing through the upstream catalytic converter 31 and the reduced-diameter portion 333 contacts the second layer 323, a decline in the NOx purification performance by the second layer 323 can be suppressed.

The catalytic converters 31 and 32 having the above such layered structures are adjusted in the following sequence. First, the base powder of the support and the noble metal component are dispersed in a solvent (e.g., water) to prepare a slurry. A honeycomb base material as the carrier is immersed in this slurry, extracted therefrom and dried, and then calcined, thereby forming a washcoat layer (first layer) on the carrier. It should be noted that the concentration of the slurry is suitably adjusted so as to achieve a predetermined washcoat thickness. The second layer and after are formed on the washcoat layer already formed by sequentially repeating such a process.

Next, the content of the OSC material will be compared between the upstream catalytic converter 31 and the downstream catalytic converter 32. The following table shows a preferred conformation for the content of OSC material in the downstream catalytic converter in a case of the content of the OSC material in the upstream catalytic converter being set to 1.

**[Table 1]**

| | CONTENT OF OSC MATERIAL |
|---|---|
| UPSTREAM CATALYTIC CONVERTER | 1 |
| DOWNSTREAM CATALYTIC CONVERTER | 0.35 (0.3 to 1) |

As shown in this table, when comparing these catalytic converters 31 and 32, the content of the OSC material in the upstream catalytic converter 31 is preferably larger than the content of the OSC material in the downstream catalytic converter 32. More specifically, in a case of the content of the OSC material in the upstream catalytic converter 31 being set to 1, the content of the OSC material in the downstream catalytic converter 32 is preferably set to be no more than 1 and at least 0.3. In the present embodiment, the proportion of the OSC material content in the downstream catalytic converter 32 to the OSC material content in the upstream catalytic converter 31 is set to 0.35.

Herein, a method for determining the content of the OSC material in the upstream catalytic converter 31 and the downstream catalytic converter 32 will be explained. The content of the OSC material is required to be set so as to be able to compensate for the oxygen storage capacity thereof even after degradation of the OSC material. In addition, degradation due to heat is the largest cause of degradation of the OSC material. Therefore, the content of the OSC material must be appropriately set according to the thermal load on the upstream catalytic converter 31 and the downstream catalytic converter 32 in the exhaust passage.

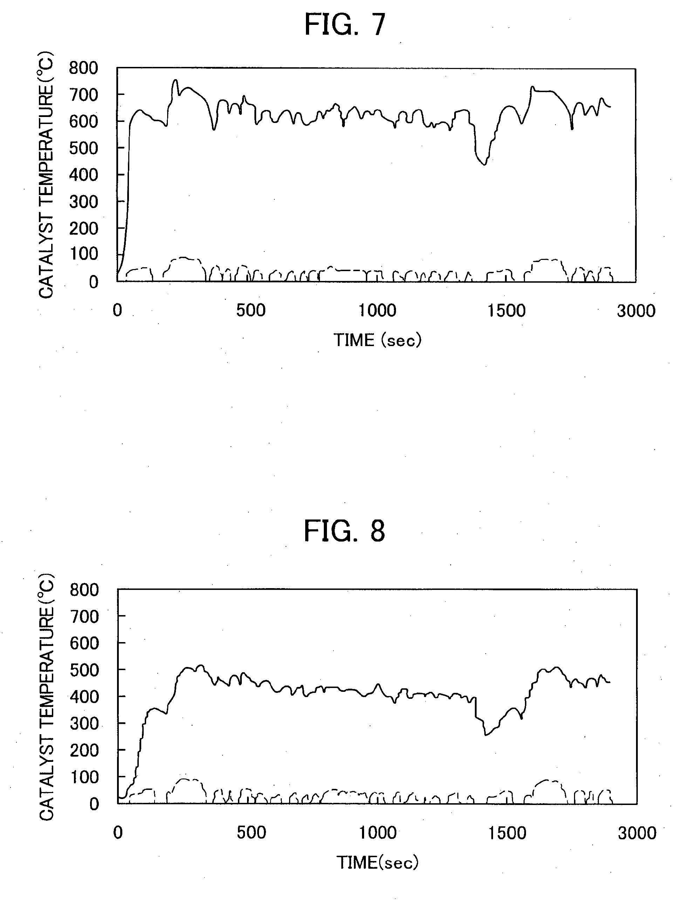

FIG. 7 is a graph showing the fluctuation in the temperature of the upstream catalytic converter 31.

FIG. 8 is a graph showing the fluctuation in the temperature of the downstream catalytic converter 32. In these FIGS. 7 and 8, the dashed lines indicate vehicle speed and the solid lines indicate the fluctuation in the temperature of the catalytic converters 31 and 32 for a predetermined layout.

As shown in these FIGS. 7 and 8, the temperature of the respective catalytic converters 31 and 32 fluctuate depending on the vehicle speed within a predetermined range. As shown in FIG. 7, the temperature of the upstream catalytic converter 31 fluctuates between about 400°C and about 750°C. In addition, as shown in FIG. 8, the temperature of the downstream catalytic converter 32 is lower than the temperature of the upstream catalytic converter 31, and fluctuates between about 250°C and about 550°C.

In this way, even in a case of performing driving the same, a greater thermal load acts on the upstream catalytic converter 31 than the downstream catalytic converter 32. Therefore, these contents of the OSC material in the upstream catalytic converter 31 and the downstream catalytic converter 32 are set to an appropriate proportion taking the thermal load into consideration, so as to be able to compensate for oxygen storage capacity even after degradation due to heat.

Next, the content of catalytic noble metal will be compared between the upstream catalytic converter 31 and the downstream catalytic converter 32. When comparing these two catalytic converters 31 and 32, the,content of catalytic noble metal in the downstream catalytic converter 32 is preferably larger than the content of catalytic noble metal in the upstream catalytic converter 31. As described above, in the present embodiment, rhodium, palladium and platinum are used as the catalytic noble metal. Therefore, the content of rhodium, which has the highest purification performance among these catalytic noble metals, will be compared for the two catalytic converters 31 and 32. The following table shows a preferred conformation for the content of rhodium in the downstream catalytic converter in a case of the content of rhodium in the upstream catalytic converter being set to 1.

**[Table 2]**

| | CONTENT OF RHODIUM |
|---|---|
| UPSTREAM CATALYTIC CONVERTER | 1 |
| DOWNSTREAM CATALYTIC CONVERTER | 1.5 (1 to 1.5) |

As shown in this table, when comparing these catalytic converters 31 and 32, the content of rhodium in the downstream catalytic converter 32 is preferably larger than the content of rhodium in the upstream catalytic converter 31. More specifically, in a case of the content of rhodium in the upstream catalytic converter 31 being set to 1, the content of rhodium in the downstream catalytic converter 32 is preferably set to be no more than 1.5 and at least 1. In the present embodiment, the proportion of rhodium content in the downstream catalytic converter 32 to rhodium content in the upstream catalytic converter 31 is set to 1.5.

Referring back to FIG. 1, the aforementioned LAF sensor 61 and oxygen concentration sensor 62 are connected to the ECU 5.

The LAF sensor 61 outputs, to the ECU 5, a signal depending on a component of the exhaust in the exhaust passage flowing into the upstream catalytic converter 31. More specifically, the LAF sensor 61 detects the air-fuel ratio of exhaust flowing into the upstream catalytic converter 31, and outputs a signal KACT according to the air-fuel ratio detected to the ECU 5.

The oxygen concentration sensor 62 outputs, to the ECU 5, a signal depending on a component of the exhaust in the exhaust passage flowing into the downstream catalytic converter 32. More specifically, the oxygen concentration sensor 62 detects the oxygen concentration (air-fuel ratio) of exhaust discharged from the upstream catalytic converter 31 and flowing into the downstream catalytic converter 32, and outputs a signal V02 according to the oxygen concentration thus detected to the ECU 5.

Herein, the output characteristics of the LAF sensor 61 and the oxygen concentration sensor 62 will be compared. The LAF sensor 61 generates an output KACT, over a wider range of air-fuel ratio than the oxygen concentration sensor 62, of a level substantially proportional thereto. Specifically, the LAF sensor 61 is able to detect the air-fuel ratio over a wider range than the oxygen concentration sensor 62. The oxygen concentration sensor 62 generates the output V02 of a high sensitivity level that is substantially proportional to the oxygen concentration of the exhaust, when the oxygen concentration of the exhaust is within a range Δ in the vicinity of the theoretical air fuel ratio. In addition, the oxygen concentration sensor 62 generates an output V02 of a substantially constant level at oxygen concentrations outside the aforementioned range Δ.

The ECU 5 includes an input circuit having functions such as of smoothing input signal waveforms from various sensors, correcting voltage levels to predetermined levels, and converting analog signal values to digital signal values, and a central computational processing unit (hereinafter referred to as "CPU"). In addition, the ECU 5 includes a storage circuit that stores various operational programs executed by the CPU, computational results, etc., and an output circuit that outputs a control signal to the actuators driving the fuel injection valves 13.

Among the modules configured by the ECU 5 including the aforementioned such hardware, only the configuration related to the control of the fuel injection valves 13 is illustrated in FIG. 1. The module illustrated in FIG. 1 includes a target air-fuel ratio calculating portion 51 that calculates a target air-fuel ratio KCMD of the engine 1, and a fuel injection amount calculating portion 52 that calculates the fuel injection amount according to the target air-fuel ratio KCMD. Herein, the target air-fuel ratio KCMD is a target value of the output KACT of the LAF sensor 61.

After having calculated a reference value for the fuel injection amount of the engine 1 based on the revolution speed and absolute pressure in the intake plumbing of the engine 1 obtained from various sensors that are not illustrated, the fuel injection amount calculating portion 52 corrects the reference value taking into account various conditions of the engine 1, and sets this as the fuel injection amount.

Next, the fuel injection amount calculating portion 52 feedback controls the air-fuel ratio of the engine 1 by adjusting the fuel injection amount previously calculated so that the output KACT of the LAF sensor 61 converges to the target air-fuel ratio KCMD calculated by the target air-fuel ratio calculating portion 51. The fuel injection amount calculated by the fuel injection amount calculating portion 52 is transmitted to the fuel injection valves 13. The fuel injection valves 13 inject fuel at predetermined crank angles of the engine 1, whereby combustion is performed in the engine 1.

It should be noted that, since a specific control technique for air-fuel ratio control has been explained in detail by the present applicants in Japanese Unexamined Patent Application Publication No. 2001-182528 and the like, an explanation in further detail thereto will be omitted herein.

The target air-fuel ratio calculating portion 51 successively calculates the target air-fuel ratio KCMD of the engine 1 based on the output KACT of the LAF sensor 61 and the output VO2 of the oxygen concentration sensor 62.

In the present embodiment, in order to raise the stability and reliability of convergence control of the target value for the output of the oxygen concentration sensor 62, the target air-fuel ratio KCMD is calculated so as to make the output VO2 of the oxygen concentration sensor 62 to converge to the target value by sliding mode control, which is a technique of feedback control having high stability to noise and the like. This sliding mode control requires a model of the control object. In the present embodiment, the exhaust system configured by the LAF sensor 61, upstream catalytic converter 31 and oxygen concentration sensor 62 on the downstream of the engine 1 is set as the control object P of sliding mode control.

An adaptive sliding mode controller 511 supposes this aforementioned control object P as the system generating the output VO2 of the oxygen concentration sensor 62 through the dead time component and the response delay component from the output KACT of the LAF sensor 61, and models the behavior of this system in advance by a discrete-time system. Then, the adaptive sliding model controller 511 takes the dead time possessed by this system and the dead time possessed by the engine 1 and ECU 5 into account, and successively calculates the target air-fuel ratio KCMD so as to make the output V02 of the oxygen concentration sensor 62 to match the target value thereof by way of adaptive sliding mode control.

Herein, the target value for the output V02 of the oxygen concentration sensor 62 is set in the vicinity of the theoretical air fuel ratio, for example. The air-fuel ratio of the engine 1 is thereby controlled so that the air-fuel ratio of exhaust flowing into the downstream catalytic converter 32 matches the theoretical air fuel ratio, and the exhaust is efficiently purified by this downstream catalytic converter 32.

A real-time identifier 512 successively identifies parameters included in the model using data of the output KACT of the LAF sensor 61 and the output V02 of the oxygen concentration sensor 62, in order to compensate for the influence of the behavioral fluctuations in the control object P modeled.

A state predictor 513 calculates a predicted value for the output VO2 of the oxygen concentration sensor 62 in order to compensate for the aforementioned dead time. With the adaptive sliding model controller 511, the target air-fuel ratio KCMD is successively generated by the adaptive sliding model algorithm based on the model, using predicted value for the output V02 of the oxygen concentration sensor 62 predicted by the state predictor 513 and the parameters identified by the real time identifier 512.

It should be noted that, since air-fuel ratio control using this sliding mode control has been explained in Japanese Unexamined Patent Application Publication No. 2000-230451 in addition to in the aforementioned Japanese Unexamined Patent Application Publication No. 2001-182528 by the present applicants, an explanation in further detail thereto will be omitted herein.

Next, for examples based on the embodiment configured in the above way, the NOx emission amount thereof will be compared with comparative examples.

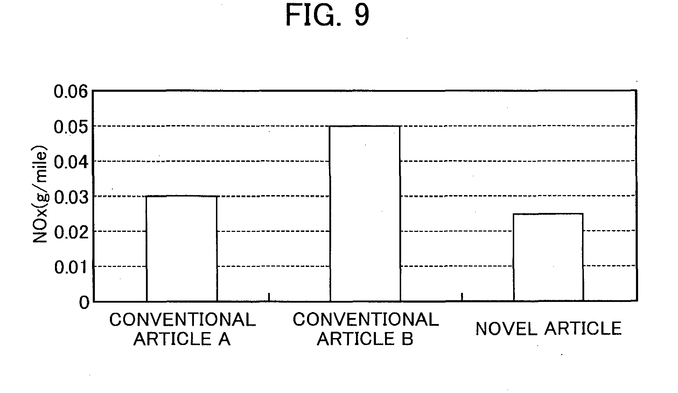

FIG. 9 shows the emission amount per unit time of NOx in a case of traveling at the vehicle speeds shown in the aforementioned FIGS. 7 and 8. In FIG. 9, "novel article" indicates the results of the present example. In addition, "conventional article A" and "conventional article B" respectively indicate the results of comparative examples configured based on conventional technology.

Herein, the article in which the amount of rhodium used was reduced by 50% relative to conventional article A was prepared as conventional article B. In addition, an article in which the amount of rhodium used was reduced by 50% relative to conventional article A was also prepared as a novel article.

As shown in FIG. 9, when the amount of rhodium used was set to 50% in the conventional article, the purification performance declined and the NOx emission amount increased drastically. In contrast, with the present example, the NOx emission amount can be decreased more than the conventional article A, irrespectively of the amount of rhodium used having been reduced by 50% relative to the conventional article A. Therefore, with the present example, it has been confirmed that high purification performance can be achieved by efficiently using rhodium of a small amount relative to the conventional articles.

As described in detail above, according to the present embodiment, the catalytic converter unit 3 that purifies exhaust was configured in the two stages of the upstream catalytic converter 31 and the downstream catalytic converter 32, and further, the content of OSC material in the upstream catalytic converter 31 was greater than the content of the OSC material in the downstream catalytic converter 32. In this way, even in a case of the air-fuel ratio of the exhaust flowing into the upstream catalytic converter 31 being unstable, the air-fuel ratio of exhaust on a downstream side thereof, i.e. exhaust flowing into the downstream catalytic converter 32, can be stabilized. Furthermore, in addition to this, the heat capacity of the downstream catalytic converter 32 is small, and thus the heat-up performance of the downstream catalytic converter 32 can be improved.

In addition, according to the present embodiment, the LAF sensor 61 and the oxygen concentration sensor 62 are provided, and thus the air-fuel ratio of the engine 1 is controlled so that the air-fuel ratio of the exhaust flowing into the downstream catalytic converter 32 matches the target value set in the vicinity of the theoretical air fuel ratio, based on the signals KACT and VO2 output from these sensors 61 and 62. The air-fuel ratio of the exhaust flowing into the downstream catalytic converter 32 can thereby be further stabilized in the vicinity of the theoretical air fuel ratio.

According to the present embodiment, since the air-fuel ratio of the exhaust flowing into the downstream catalytic converter 32 can be stabilized in the vicinity of the theoretical air fuel ratio in the above way, it is possible to efficiently purify exhaust by the downstream catalytic converter 32 in particular. Specifically, the purification performance of exhaust can be maintained without adding excess catalytic noble metal from the perspective of the upstream catalytic converter 31 and downstream catalytic converter 32 overall. In other words, compared to a conventional exhaust purification apparatus, the amount of catalytic noble metal used can be reduced without decreasing the exhaust purification performance.

In addition, according to the present embodiment, the content of catalytic noble metal in the downstream catalytic converter 32 was greater than the content of the upstream catalytic converter 31. As described above, the air-fuel ratio of the exhaust flowing into the downstream catalytic converter 32 can be stabilized to the vicinity of the theoretical air fuel ratio in the present embodiment. Therefore, catalytic noble metal can be efficiently used as a whole by making the content of catalytic noble metal in the downstream catalytic converter, for which the air-fuel ratio has been stabilized, to be large. Consequently, the amount of catalytic noble metal used can be further reduced. In addition, since the upstream catalytic converter 31 is closer to the engine 1 than the downstream catalytic converter 32, the influence from heat degradation thereon is great. Therefore, the influence from heat degradation on the catalytic noble metal as a whole can be reduced by making the content of catalytic noble metal in the upstream catalytic converter 31 less than the downstream catalytic converter 32. Consequently, the purification performance by the catalytic converter unit 3 can be maintained longer.

In addition, according to the present embodiment, at least one selected from the group consisting of rhodium palladium and platinum is used as the catalytic noble metal. The NOx purification performance by the catalytic converter unit 3 can thereby be ensured. Herein, the purification performance of rhodium, palladium and platinum will be compared.

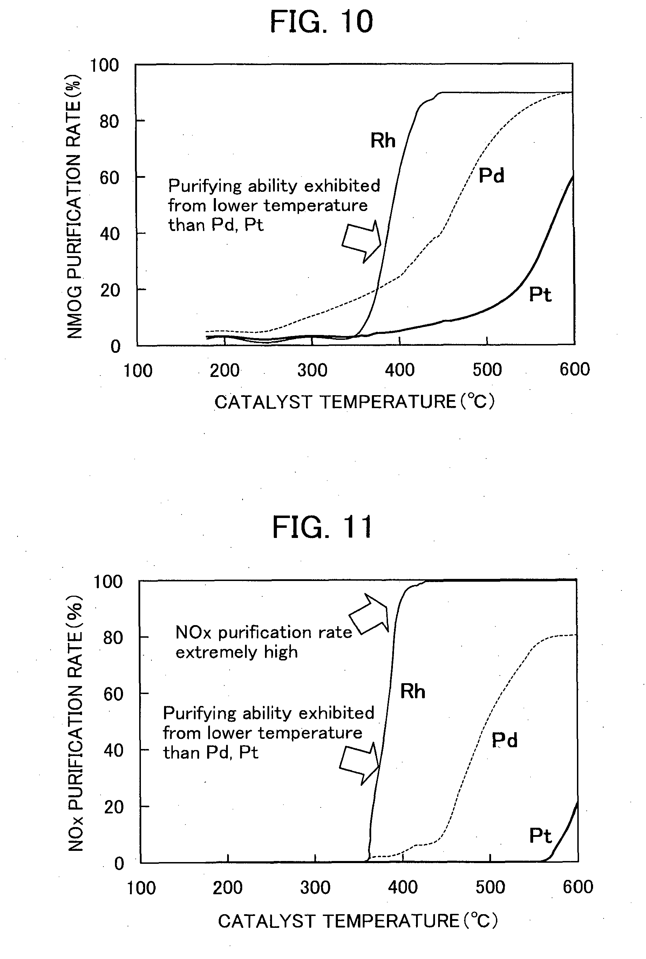

FIG. 10 is a graph showing the temperature dependence of the NMOG purification rate of each catalytic noble metal.

As shown in FIG. 10, compared to palladium and platinum, rhodium shows a higher NMOG purification rate from a state in which the catalyst temperature is low.

FIG. 11 is a graph showing the temperature dependence of the NOx purification rate of each catalytic noble metal.

As shown in FIG. 11, compared to palladium and platinum, rhodium shows a higher NOx purification rate from a state in which the catalyst temperature is low. In addition, rhodium shows a particularly high NOx purification rate even after having reached the activation temperature. Among the catalytic noble metals, rhodium has particularly high purification performance, as described above.

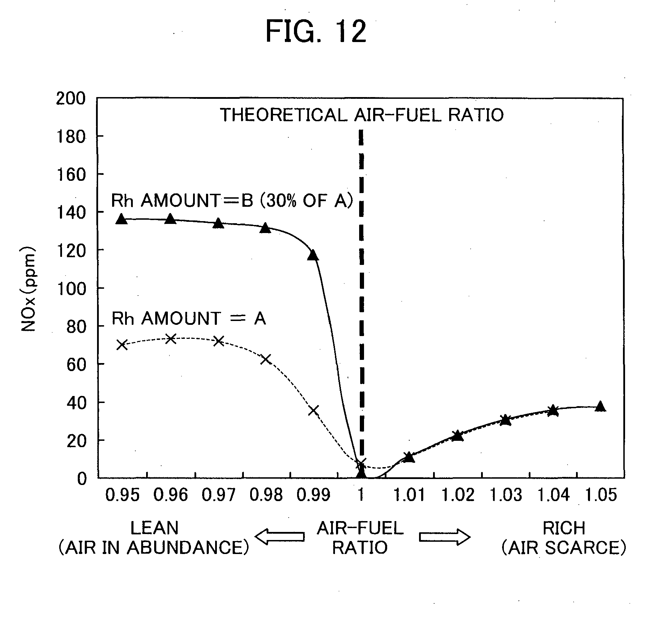

FIG. 12 is a graph showing the air-fuel ratio dependence of the NOx purification performance of rhodium. In FIG. 12, the dotted line indicates the air-fuel ratio dependence of the NOx emission amount (ppm) in a case of the amount of rhodium used being set as A, and the solid line indicates the air-fuel ratio dependence of the NOx emission amount (ppm) in a case of the amount of rhodium used being set as B, which is 30% of A.

As shown in FIG. 12, the NOx purification performance of rhodium is particularly high in the vicinity of the theoretical air fuel ratio, and decreases when deviating from the theoretical air fuel ratio to the lean side and rich side. In particular, when deviating from the theoretical air fuel ratio to the lean side, the NOx purification performance suddenly declines drastically.

Herein, a case in which the amount of rhodium used is set to A will be compared with a case of being set to B. As shown in FIG. 12, when the amount of rhodium used is decreased, the decline in NOx purification performance for the lean side is more sudden. In other words, when the amount of rhodium used is reduced, the width of the window on the lean side suddenly becomes narrow. This indicates that the NOx purification performance can be maintained by keeping the air-fuel ratio within the range of the narrow window, even if the amount of rhodium used is reduced. In the present embodiment, by making the air-fuel ratio of the exhaust flowing into the downstream catalytic converter 32, which contains more rhodium as described above, it is possible to maintain a high NOx purification performance despite the amount of rhodium used being reduced in this way.

In addition, according to the present embodiment, at least one selected from the group consisting of cerium and zirconium is used as the OSC material. The oxygen storage capacity can thereby be ensured by the catalytic converter unit 3.

In addition, according to the present embodiment, the catalyst layers 31L of the upstream catalytic converter 31 are configured by three layers, with palladium being contained in the first layer 312, rhodium being contained in the second layer 313, and palladium being contained in the third layer 314 in order from the carrier 311 side to the surface side. Incidentally, among the catalytic noble metals, rhodium is particularly high price and the purification performance is high, as described above. As a result, for the rhodium, it is necessary to avoid poisoning by phosphorus and sulfur as much as possible, while reducing the amount used thereof as much as possible. In the present embodiment, poisoning of the rhodium by phosphorus and sulfur can be suppressed by providing rhodium to a second layer 313 that is not the surface most side. Therefore, the NOx purification performance of the catalytic converter unit 3 overall can be stabilized.

In addition, according to the present embodiment, the catalytic layers 32L of the downstream catalytic converter 32 are configured by two layers, with palladium being contained in the first layer 322 and rhodium being contained in the second layer 323, in order from the carrier 321 side to the surface side. The heat capacity can be reduced relative to the upstream catalytic converter 31 by configuring the catalyst layers 32L as two layers in this way. The downstream catalytic converter 32 can thereby be quickly heated up and activated. In addition, NOx can be efficiently purified by providing rhodium for which the purification performance is particularly high to the second layer 323, which becomes the surface most side.

Incidentally, the influence of poisoning of rhodium by phosphorus and sulfur is a concern due to providing rhodium to the second layer 323, which becomes the surface most side. However, since the exhaust having passed through the upstream catalytic converter 31 flows into the downstream catalytic converter 32, the influence of poisoning by phosphorus and sulfur is small compared to the upstream catalytic converter 31. Therefore, exhaust can be efficiently purified over an extended time period.

In addition, according to the present embodiment, the upstream catalytic converter 31 is configured by the carrier 311 and the plurality of catalyst layers 31L loaded on this carrier 311, with rhodium not being contained in the layer on the surface most side. Poisoning of the rhodium, which is particularly high price and has high purification performance as a catalytic noble metal, by phosphorus and sulfur can thereby be suppressed.

In addition, according to the present embodiment, the downstream catalytic converter 32 is configured by the carrier 321 and the plurality of catalyst layers 32L loaded on this carrier 321, with rhodium being contained in the layer on the surface most side. Exhaust can thereby be efficiently purified by the rhodium having high purification performance. Herein, although the influence of poisoning of the rhodium by phosphorus and sulfur is a concern due to providing rhodium at the surface most side, as described above, since exhaust that has passed through the upstream catalytic converter 31 flows into the downstream catalytic converter 32, the influence of poisoning by phosphorus and sulfur is small compared to the upstream catalytic converter 31. Therefore, exhaust can be efficiently purified over an extended time period.

According to the present embodiment, by providing the upstream catalytic converter 31 and the downstream catalytic converter 32 immediately after the engine 1, the downstream catalytic converter 32, which is a lower stage that does not heat up easily, can be quickly heated up. A decline in the purification performance during low temperatures such as immediately after startup of the automobile can thereby be prevented.

In the present embodiment, the ECU 5 configures the air-fuel ratio control means. More specifically, the target air-fuel ratio calculating portion 51 and the fuel injection amount calculating portion 52 configured by the ECU 5 constitute an air-fuel ratio control means. In addition, the LAF sensor 61 constitutes an upstream exhaust sensor, and the oxygen concentration sensor 62 constitutes a downstream exhaust sensor.

It should be noted that the present invention is not to be limited to the aforementioned embodiment, and various modifications thereto are possible.

For example, although the upstream catalytic converter 31 and the downstream catalytic converter 32 are housed in a single casing 33 in the above-mentioned embodiment, it is not limited thereto. For example, the upstream catalytic converter may be provided immediately after the engine, and the downstream catalytic converter may be provided under the floor of the automobile spaced apart from the upstream catalytic converter. The progression of degradation of the downstream catalytic converter can thereby be delayed.

In addition, the present invention can also be applied to an exhaust purification apparatus such as of an engine for nautical propulsion such as an outboard engine in which the crank shaft is arranged in the vertical direction.

## Claims

1. An exhaust purification apparatus (2) for an internal combustion engine (1), including a catalytic converter (3) that is provided to an exhaust passage of the internal combustion engine (1) and purifies exhaust flowing through the exhaust passage,
the catalytic converter (3) containing a component having oxygen storage capacity in addition to a catalytic noble metal having NOx purification capacity, wherein the catalytic noble metal having NOx purification capacity includes at least one selected from the group consisting of rhodium, palladium and platinum, and including an upstream catalytic converter (31) and a downstream catalytic converter (32) provided on a more downstream side than the upstream catalytic converter (31),
wherein the upstream catalytic converter (31) comprises more of the component having oxygen storage capacity than the downstream catalytic converter (32), and the downstream catalytic converter (32) comprises more of rhodium than the upstream catalytic converter (31), and
wherein the exhaust purification apparatus (2) comprises:
an upstream exhaust sensor (61) that outputs a signal (KACT) according to a component of the exhaust flowing into the upstream catalytic converter (31);
a downstream exhaust sensor (62) that is provided between the upstream catalytic converter (31) and the downstream catalytic converter (32) and outputs a signal (VO2) according to a component of the exhaust flowing into the downstream catalytic converter (32); and
an air-fuel ratio control means (5, 51, 52) for controlling an air-fuel ratio of the internal combustion engine (1) based on the signals output from the upstream exhaust sensor (61) and the downstream exhaust sensor (62), so that an air-fuel ratio of exhaust flowing into the downstream catalytic converter (32) matches a target value set in the vicinity of a theoretical air fuel ratio,
wherein the upstream catalytic converter (31) is provided immediately after the internal combustion engine (1),
**characterized in that**
the upstream catalytic converter (31) includes a carrier (311) and a catalyst layer (31 L) of three layers loaded to be stratified on the carrier (311),
the downstream catalytic converter (32) includes a carrier (321) and a catalyst layer (32L) of two layers to be stratified on the carrier (321),
the catalyst layer (31 L) of three layers of the upstream catalytic converter (31) is configured to include a first layer (321) containing palladium, a second layer (313) containing rhodium and free of platinum, and a third layer (314) containing palladium, in this order from the carrier (311) side to a surface side, and
the catalytic layer (32L) of two layers of downstream catalytic converter (32) is configured to include a first layer (322) containing palladium and a second layer (323) containing rhodium and platinum, in this order from the carrier (321) side to a surface side.

2. The exhaust purification apparatus (2) for an internal combustion engine (1) according to claim 1, wherein the component having oxygen storage capacity includes at least one selected from the group consisting of cerium and zirconium.

3. The exhaust purification apparatus (2) for an internal combustion engine (1) according to claim 1 or 2, wherein rhodium is not contained in the layer (314) on a surface most side among the plurality of catalyst layers (312, 313, 314) of the upstream catalytic converter (31).

4. The exhaust purification apparatus (2) for an internal combustion engine (1) according to any one of claims 1 to 3, wherein the downstream catalytic converter (32) is provided below an automobile floor of the vehicle.

5. The exhaust purification apparatus (2) for an internal combustion engine (1) according to any one of claims 1 to 3, wherein the upstream catalytic converter (31) and the downstream catalytic converter (32) are both provided immediately after the internal combustion engine (1).

## Patentansprüche

1. Abgasreinigungsvorrichtung (2) für einen Verbrennungsmotor (1), umfassend einen katalytischen Wandler (3), welcher an einem Abgasdurchgang von dem Verbrennungsmotor (1) vorgesehen ist und durch den Abgasdurchgang strömendes Abgas reinigt,
wobei der katalytische Wandler (3) eine Komponente enthält, welche eine Sauerstoffspeicherfähigkeit hat, zusätzlich zu einem katalytischen Edelmetall, welches eine NOx-Reinigungsfähigkeit hat, wobei das katalytische Edelmetall, welches eine NOx-Reinigungsfähigkeit hat, wenigstens ein Element umfasst, welches ausgewählt ist aus der Gruppe bestehend aus Rhodium, Palladium und Platin, und einen stromaufwärtigen katalytischen Wandler (31) und einen stromabwärtigen katalytischen Wandler (32) umfasst, welcher auf einer weiter stromabwärtigen Seite als der stromaufwärtige katalytische Wandler (31) vorgesehen ist,
wobei der stromaufwärtige katalytische Wandler (31) mehr von der Komponente umfasst, welche eine Sauerstoffspeicherfähigkeit hat, als der stromabwärtige katalytische Wandler (32), und der stromabwärtige katalytische Wandler (32) mehr Rhodium umfasst als der stromaufwärtige katalytische Wandler (31), und
wobei die Abgasreinigungsvorrichtung (2) umfasst:
einen stromaufwärtigen Abgassensor (61), welcher ein Signal (KACT) gemäß einer Komponente von dem in den stromaufwärtigen katalytischen Wandler (31) strömenden Abgas ausgibt;
einen stromabwärtigen Abgassensor (62), welcher zwischen dem stromaufwärtigen katalytischen Wandler (31) und dem stromabwärtigen katalytischen Wandler (32) vorgesehen ist und ein Signal (V02) ausgibt gemäß einer Komponente von dem in den stromabwärtigen katalytischen Wandler (32) strömenden Abgas; und
ein Luft-Kraftstoff-Verhältnis-Steuer-/Regelmittel (5, 51, 52), um ein Luft-Kraftstoff-Verhältnis von dem Verbrennungsmotor (1) basierend auf den Signalen zu steuern/regeln, welche von dem stromaufwärtigen Abgassensor (61) und dem stromabwärtigen Abgassensor (62) ausgegeben werden, sodass ein Luft-Kraftstoff-Verhältnis von Abgas, welches in den stromabwärtigen katalytischen Wandler (32) strömt, mit einem Zielwert übereinstimmt, welcher nahe einem theoretischen Luft-Kraftstoff-Verhältnis eingestellt ist,
wobei der stromaufwärtige katalytische Wandler (31) unmittelbar nach dem Verbrennungsmotor (1) vorgesehen ist,
**dadurch gekennzeichnet, dass**
der stromaufwärtige katalytische Wandler (31) einen Träger (311) und eine Katalysatorschicht (31 L) aus drei Schichten umfasst, welche derart beladen sind, dass sie auf den Träger (311) zu schichten sind,
der stromabwärtige katalytische Wandler (32) einen Träger (321) und eine Katalysatorschicht (32L) aus zwei Schichten umfasst, welche auf den Träger (321) zu schichten sind,
die Katalysatorschicht (31 L) aus drei Schichten von dem stromaufwärtigen katalytischen Wandler (31) dazu konfiguriert ist, eine erste Schicht (321) zu umfassen, welche Palladium enthält, eine zweite Schicht (313) zu umfassen, welche Rhodium enthält und frei von Platin ist, und eine dritte Schicht (314) zu umfassen, welche Palladium enthält, in dieser Reihenfolge von der Seite des Trägers (311) zu einer Seite einer Oberfläche, und
die Katalysatorschicht (32L) aus zwei Schichten von dem stromabwärtigen katalytischen Wandler (32) dazu konfiguriert ist, eine erste Schicht (322) zu umfassen, welche Palladium enthält, und eine zweite Schicht (323) zu umfassen, welche Rhodium und Platin enthält, in dieser Reihenfolge von der Seite des Trägers (321) zu einer Seite einer Oberfläche.

2. Abgasreinigungsvorrichtung (2) für einen Verbrennungsmotor (1) nach Anspruch 1, wobei die Komponente, welche eine Sauerstoffspeicherfähigkeit hat, wenigstens ein Element ausgewählt aus der Gruppe bestehend aus Cer und Zirkonium umfasst.

3. Abgasreinigungsvorrichtung (2) für einen Verbrennungsmotor (1) nach Anspruch 1 oder 2, wobei Rhodium in der Schicht (314) auf einer Seite, welche einer Oberfläche am nächsten ist, unter der Vielzahl von Katalysatorschichten (312, 313, 314) von dem stromaufwärtigen katalytischen Wandler (31) nicht enthalten ist.

4. Abgasreinigungsvorrichtung (2) für einen Verbrennungsmotor (1) nach einem der Ansprüche 1 bis 3, wobei der stromabwärtige katalytische Wandler (32) unter einem Automobilboden von dem Fahrzeug vorgesehen ist.

5. Abgasreinigungsvorrichtung (2) für einen Verbrennungsmotor (1) nach einem der Ansprüche 1 bis 3, wobei der stromaufwärtige katalytische Wandler (31) und der stromabwärtige katalytische Wandler (32) beide unmittelbar nach dem Verbrennungsmotor (1) vorgesehen sind.

## Revendications

1. Appareil de purification de gaz d'échappement (2) pour un moteur à combustion interne (1), comportant un convertisseur catalytique (3) qui est prévu à un passage de gaz d'échappement du moteur à combustion interne (1) et qui purifie les gaz d'échappement s'écoulant à travers le passage de gaz d'échappement,
le convertisseur catalytique (3) contenant un composant présentant une capacité de stockage d'oxygène en plus d'un métal noble catalytique présentant une capacité de purification de NOx, dans lequel le métal noble catalytique présentant une capacité de purification de NOx comporte au moins l'un sélectionné dans le groupe se composant de rhodium, palladium et platine, et comportant un convertisseur catalytique en amont (31) et un convertisseur catalytique en aval (32) prévu sur un côté plus en aval que le convertisseur catalytique en amont (31),
dans lequel le convertisseur catalytique en amont (31) comprend plus du composant présentant une capacité de stockage d'oxygène que le convertisseur catalytique en aval (32), et le convertisseur catalytique en aval (32) comprend plus du rhodium que le convertisseur catalytique en amont (31), et
dans lequel l'appareil de purification de gaz d'échappement (2) comprend :
un capteur de gaz d'échappement en amont (61) qui délivre un signal (KACT) en fonction d'un composant des gaz d'échappement s'écoulant dans le convertisseur catalytique en amont (31) ;
un capteur d'échappement en aval (62) qui est prévu entre le convertisseur catalytique en amont (31) et le convertisseur catalytique en aval (32) et délivre un signal (V02) selon un composant des gaz d'échappement s'écoulant dans le convertisseur catalytique en aval (32) ; et
un moyen de régulation de rapport air-carburant (5, 51, 52) pour réguler un rapport air-carburant du moteur à combustion interne (1) sur la base des signaux délivrés du capteur de gaz d'échappement en amont (61) et du capteur de gaz d'échappement en aval (62), de sorte qu'un rapport air-carburant des gaz d'échappement s'écoulant dans le convertisseur catalytique en aval (32) corresponde à une valeur cible réglée à proximité d'un rapport air-carburant théorique,
dans lequel le convertisseur catalytique en amont (31) est prévu immédiatement après le moteur à combustion interne (1),
**caractérisé en ce que**
le convertisseur catalytique en amont (31) comporte un support (311) et une couche de catalyseur (31L) de trois couches chargées pour être stratifiées sur le support (311),
le convertisseur catalytique en aval (32) comporte un support (321) et une couche de catalyseur (32L) de deux couches à stratifier sur le support (321),
la couche de catalyseur (31L) de trois couches du convertisseur catalytique en amont (31) est configurée pour comporter une première couche (321) contenant du palladium, une deuxième couche (313) contenant du rhodium et dépourvue de platine, et une troisième couche (314) contenant du palladium, dans cet ordre du côté de support (311) à un côté de surface, et
la couche de catalyseur (32L) de deux couches de convertisseur catalytique en aval (32) est configurée pour inclure une première couche (322) contenant du palladium et une deuxième couche (323) contenant du rhodium et du platine, dans cet ordre du côté de support (321) à un côté de surface.

2. Appareil de purification de gaz d'échappement (2) pour un moteur à combustion interne (1) selon la revendication 1, dans lequel le composant présentant une capacité de stockage d'oxygène comporte au moins l'un sélectionné dans le groupe se composant de cérium et de zirconium.

3. Appareil de purification de gaz d'échappement (2) pour un moteur à combustion interne (1) selon la revendication 1 ou 2, dans lequel il n'est pas contenu de rhodium dans la couche (314) sur un côté le plus près de la surface parmi la pluralité de couches de catalyseur (312, 313, 314) du convertisseur catalytique en amont (31).

4. Appareil de purification de gaz d'échappement (2) pour un moteur à combustion interne (1) selon l'une quelconque des revendications 1 à 3, dans lequel le convertisseur catalytique en aval (32) est prévu au-dessous d'un plancher automobile du véhicule.

5. Appareil de purification de gaz d'échappement (2) pour un moteur à combustion interne (1) selon l'une quelconque des revendications 1 à 3, dans lequel le convertisseur catalytique en amont (31) et le convertisseur catalytique en aval (32) sont tous les deux prévus immédiatement après le moteur à combustion interne (1).
